Europäisches Patentamt

European Patent Office

Office européen des brevets

(11) Publication number: **0 111 649**
A1

# (12) EUROPEAN PATENT APPLICATION

(21) Application number: 83109557.5

(22) Date of filing: 26.09.83

(51) Int. Cl.³: **B 23 B 27/16**

(30) Priority: 15.12.82 US 450058

(43) Date of publication of application:
27.06.84 Bulletin 84/26

(84) Designated Contracting States:
AT BE CH DE FR GB IT LI LU NL SE

(71) Applicant: Lindsay, Harold William
Lindsay Enterprises, Inc. 2451 N.W. 30th
Portland Oregon 97210(US)

(72) Inventor: Lindsay, Harold William
Lindsay Enterprises, Inc. 2451 N.W. 30th
Portland Oregon 97210(US)

(74) Representative: Frankland, Nigel H. et al,
FORRESTER & BOEHMERT Widenmayerstrasse 4/l
D-8000 München 22(DE)

(54) A tool holder.

(57) In a cutting tool a retention pin (12) releasably holds an insert (10), or an insert and seat, in place in a recess (20) of a cutter body (13). The retention pin (12) is fabricated from a blank having a cylindrical body portion (34) with a first axis (40) concurrent with the axis of the cylindrical head thereof (32). The body portion is threaded on a second axis (46) angularly disposed with respect to the first axis (40) and intersecting the same at about the mid-point (42) of the body portion (34). When the thus threaded pin is inserted into the bore it rotates the head portion (32) about the second axis (46) thereby to force the cutter insert (10) against the supporting shoulders (22). A lip (60) is provided on a shoulder (56) that is abutted by the cutting insert (10) to prevent tilting of the cutting insert.

FIG.1

Croydon Printing Company Ltd.

"A Tool Holder"

THIS INVENTION relates to a tool holder and more particularly to a tool holder adpated releasably to hold a disposable cutting insert in a seat or recess formed in the shank thereof.

Cutting tools of the aforesaid type typically have three or in some instances four components- a shank, a retention pin, a disposable cutting insert made of a very hard cutting material such as a suitable metallic carbide, and if necessary, a seat or seating member for the insert. The shank is formed with a recess to provide a seating face and a supporting shoulder for the insert or for the insert and the seating member. The retention pin is typically adjustably secured at one end thereof in a threaded bore formed in the shank. The other end of the pin projects into a hole in the insert. The design of the assemblage is such that as the retention pin is threaded into the bore in the shank, it forces the cutting insert against the supporting shoulder of the shank and locks it in the operating position.

European Patent Publication No. 0054611 identifies various prior art Patent Specifications which disclose a holder for holding a disposable cutting insert, the insert having an axial hole therein, the holder comprising a shank having a recess therein to provide a seating face and at least one supporting shoulder for supporting the cutting insert, the shank having a threaded bore therein, the bore being substantially normal to the seating face and adapted for alignment with the hole in the insert, the holder further comprising a threaded retention pin engaging the threaded bore, the pin having a cylindrical head portion adapted to engage the hole in the insert.

European Patent Publication No. 0054611 specifically discloses a tool holder of this type in which the retention pin is fabricated from a blank having a cylindrical body portion having a first axis concurrent with the axis of the cylindrical head portion thereof, the body portion being threaded on a second axis angularly disposed with respect to the first axis and intersecting the same, so that when the pin is threaded into the bore the head portion rotates about the second axis, thereby forcing the cutting insert against the supporting shoulder while drawing the insert into engagement with the seating face.

The arrangement specifically disclosed in the European Patent Publication No. 0054611 sometimes suffers from the disadvantage that the cutting insert can tilt or tip during insertion thereof.

According to this invention there is provided a holder for holding a disposable cutting insert, the insert having an axial hole therein, the holder comprising a shank having a recess therein to provide a seating face and at least one supporting shoulder for supporting the cutting insert, the shank having a threaded bore therein, the bore being substantially normal to the seating face and adapted for alignment with the hole in the insert, the holder further comprising a threaded retention pin engaging the threaded bore, the pin having a cylindrical head portion adapted to engage the hole in the insert wherein the retention pin is fabricated from a blank having a cylindrical body portion having a first axis concurrent with the axis of the cylindrical head portion thereof, the body portion being threaded on a second axis angularly disposed with respect to the first axis and intersecting the same, there being a retaining lip formed in the upper edge of the supporting shoulder that engages the cutting insert, so that when the pin is threaded into the bore the head portion rotates about the second axis thereby forcing the cutting insert against the supporting shoulder so that the retaining lip engages an edge of the insert to retain the insert fully in contact with the seating face and prevent tipping thereof.

In one embodiment the holder further comprises a seating member adapted to rest on the seating face the seating member defining a shoulder carrying said lip to retain the edge of the insert.

In order that the present invention may be more readily understood, and so that further features thereof may be appreciated, the invention will now be described by way of example with reference to the accompanying

-3-                    **0 1 1 1 6 4 9**

drawings in which:

Figure 1 is an exploded perspective view of a holder in accordance with the invention, the holder including a seating member having a retaining lip, and the cutting insert being formed with a positive rake;

Figure 2 is a perspective view of a blank from a which a retention pin is fabricated;

Figure 3 is a side elevational view of the retention pin after it has been threaded;

Figure 4 is a top view of the holder of Figure 1 illustrating the cutting insert in a fully seated position;

Figure 5 is a sectional view taken on line V-V of Figure 4;

Figure 6 is a top view of a another embodiment of the invention wherein the holder itself is provided with a retaining lip, the cutting insert also being illustrated in a fully seated position; and

Figure 7 is a sectional view taken on line VII-VII of Figure 6.

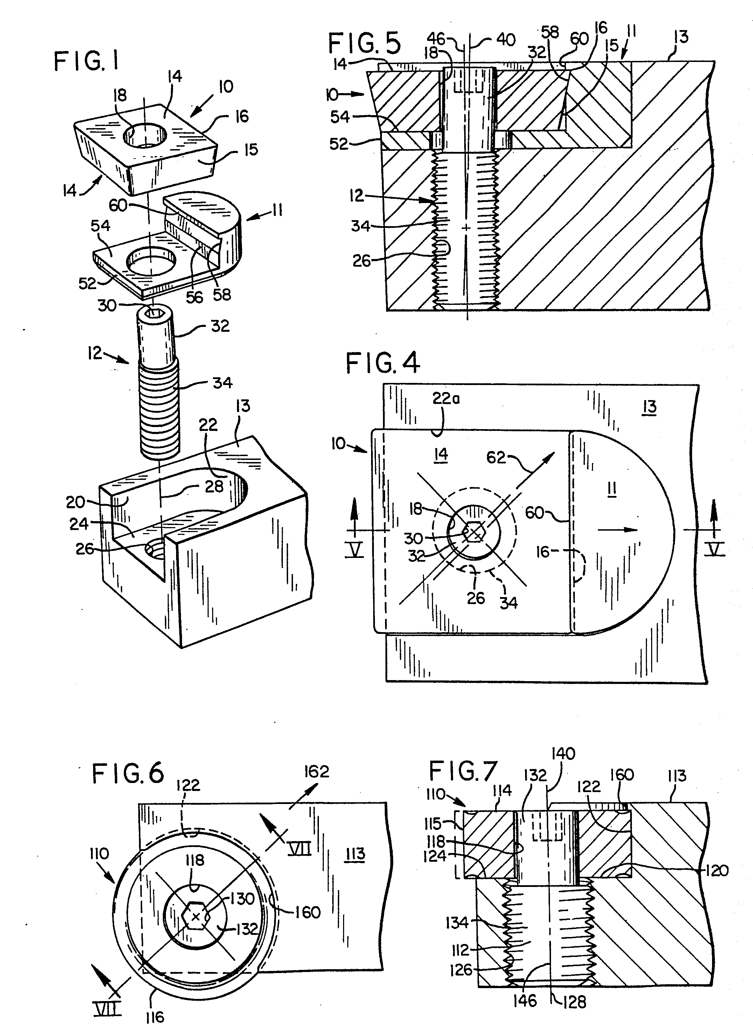

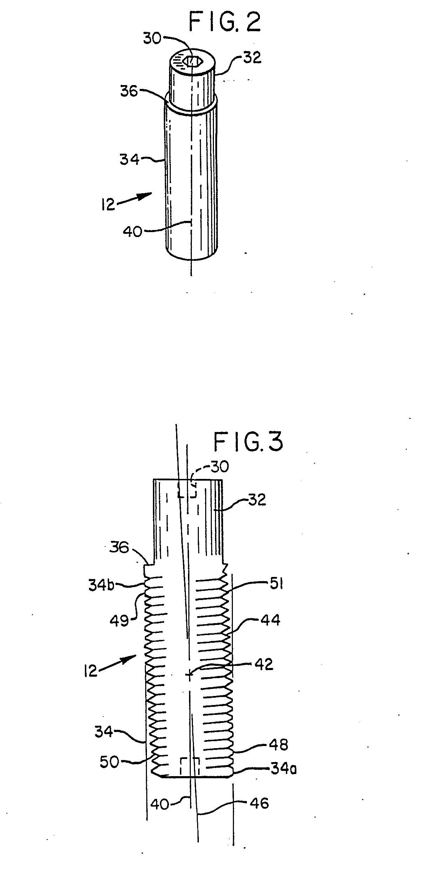

Referring to the drawings and particularly to Figure 1 it can be seen that a tool holder in accordance with the present invention comprises four principal parts, a namely a cutting insert 10, a cutting insert seat or seating member 11, a retention pin 12 and a cutting tool shank 13. The cutting insert 10 is of the disposable type, preferably being made of a very hard cutting material, such as a suitable metallic carbide. The cutting insert 10 has oppositely parallel faces 14 and peripheral surfaces 15. A central through-going hole 18 is provided, the axis of which is perpendicular to the planes of the parallel faces 14.

The cutting tool shank 13 contains a reccess 20 at the head portion thereof forming a supporting shoulder 22 of generally curved configuration, and a planar seating face 24. The shank is provided with a threaded bore 26 having an axis 28. The axis 28 of the bore 26 is substantially normal to the seating face 24 and is located substantially centrally of that seating face. The threaded bore 26 extends completely through the shank, as shown.

The terms "upper" and "lower" are used herein with reference to the position of the tool holder and the principal part thereof as they are shown in the drawings. The tool, may of course, assume any position in a cutting or machining operation.

The insert 10 and seat 11 are fastened in the recess 20 by the retention pin 12 which has a hexagonal socket 30, or other suitable means for engaging an adjusting tool, formed in its upper or, if preferred, in its lower end.

The retention pin 12 is illustrated in Figure 2 in its blank form, i.e. prior to threading. It comprises an upper cylindrical head portion 32 which is dimensioned to have a slack fit in the hole 18 of the insert 10. The blank further comprises a lower concentric cylindrical body portion 34, which is of greater diameter than the head portion 32 leading to the creation of a step 36. All the described portions of the pin 12 have a common axis 40.

The threading of the pin 12 will now be described. This is accomplished by tilting the pin 12 by approximately 2 degrees about the centre point 42 of that portion of axis 40 within the body portion 34 and then cutting a thread 44 on the resulting tilted axis 46. The centre axis of the thread 44 is thus directly on the axis 40 of the blank only at point 42. Because the thread axis 46 is tilted with respect to the blank axis 40, a portion 48 of the threads 44 at the lower end 34a of the body 34 are cut with some portions of their apices missing; the same occurs with respect to a portion 49 of the threads 44 at the upper end 34b of the body portion 34. The remaining portions 50, 51 of the thread 44 at the lower and upper ends 34a and 34b of the body portion 34 respectively, are cut with full apices.

The seating member 11 is formed generally to fit within the recess 20. The seating member 11 has an extending planar member 52 having substantially the same dimensions and configuration as the seating face 24. The seating member 11 may thus be snugly received within the recess 20. An upper surface of part of the planar portion 52 forms a supporting surface 54 for the cutting insert 10. An upstanding shoulder 56 is formed at one side edge of the supporting surface 54. The shoulder 54 is located relative to a through-going bore formed in the planar portion 52, through which the pin 12 is adapted to pass, such that the shoulder 56 forms a support for one face 15 of the cutting insert 10. The shoulder 56 is provided with a recess 58 to accommodate the positive rake angle of the insert 10. The recess 58 effectively defines a retaining lip 60 which is formed at the upper edge of the shoulder 56. The lip 60 is designed to retain one cutting edge 16 of the insert 10 when the insert 10 is drawn into full engagement with the seat 11 and the recess 20.

The cutting insert 10 described above may have a standard positive rake angle of about 10 degrees or 11 degrees. Thus the surfaces 15 form an angle of about 10 degrees or 11 degrees with a perpendicular to the faces 14.

When the cutting insert is secured to the tool holder a threaded body portion 34 of the retention pin 12 is threadedly inserted into the threaded bore 26. The cylindrical head portion 32 passes through the bore formed in the planar part 52 of the seat 11 and through the hole 18 formed in the insert 10.

Since the thread 44 is cut on the axis 46, which is angularly disposed with respect to the axis 40, when the pin 20 is inserted into the bore 26, the head portion 32 rotates about axis 46 as the pin 12 is itself rotated. As the pin is rotated the insert 10 moves into engagement with the seat 11, and the seat 11 moves into the desired position within the recess 20. When the pin 12 is somewhat less than 90 degrees removed from its fully inserted position the head portion 32 is at the maximum outboard position, and when in this position the insert 10 and the seating member 11 can be removed from the shank 13.

As the pin 12 is further rotated towards its fully seating position, the head portion 32 rotates about axis 46 and translates in the direction of the arrow 62 in Figure 4 thereby to force the insert 10 simultaneously into engagement with the side 22a of recess 20 and shoulder 56 of the seating member 11. The upper edge 16 of the insert 10 is received in the recess 58 and is retained by the lip 60.

It is to be noted that the provision of the lip 60 requires that the insert 10 and the seat member 11 move as a single unit when being seated in or released from the recess 20. The lip 60 retains the insert 10 fully in contact with the surface 54 of the member 11 and, of course, the planar portion 52 is retained fully in contact with the seating face 24 of the recess 20. Tipping of the insert 10 during insertion, which might occur due to its positive rake, is thus completely precluded.

Figures 6 and 7 illustrate a further embodiment of the invention wherein the retaining lip is provided directly on the shank. Referring to Figures 6 and 7 a tool holder comprises a circular cutting insert 110 which is retained by a pin 112 with a shank 113. The insert 110 has oppositely spaced parallel faces 114 and a cylindrical peripheral surface 115 forming a circular cutting edge 116, as shown. The insert 110 has a central through-going aperture 118.

The shank 113 has a recess 120 at the head end thereof forming an arcuate supporting shoulder 122 and seating face 124. The shank 113 has a threaded bore 126 having an axis 128 normal to the face 124 and extending completely through the shank 113, as shown. The axis of the bore 116 is substantially centrally located with regard to the face 124.

The embodiment illustrated in Figures 6 and 7 does not include a seating member. Rather a lip 160 is formed at the upper edge of the shoulder 122 such that the lip 160 can retain a portion of the edge 116 of the insert 110 when the insert 110 is drawn into full engagement within the recess 120.

As in the case of the previously described embodiment, the insert 110 is fastened in the recess 120 by a pin 112 which has a socket 130 formed in its upper end. The pin 112 has effectively the same configuration as the pin 12 described above and thus comprises an upper cylindrical head portion 132 which has a slack fit within the aperture 118. The lower body portion 134 of the pin 112 is threaded on an axis 146 which makes a slight angle with the axis 140 of the head 132 and the unthreaded body portion.

The threaded portion 134 of the pin 112 is received in the threaded bore 126 of the shank 113. When this occurs the head portion 132 rotates about the axis 146 as the insert 110 is drawn into the recess 120. When the pin 112 is about 90 degrees removed from its fully inserted position, the head 132 is in the releasing position as indicated by dashed lines in Figure 7. In that position the insert 110 can be readily removed from the shank 113. As the pin 112 is further rotated to its fully seating position, the head portion 132 further rotates about the axis 146 and translates in the direction of the arrow 162 shown in Figure 6, thereby tending to force the insert 110 under the lip 160 and into engagement with the shoulder 122. The lip 160 thus retains the insert 110 fully in contact with the face 124. Tipping of the insert is thus completeley precluded.

The degree of tilt of the axis 46 with respect to the axis 40 may be 2 degrees as described above but the precise angle of the tilt is not highly critical. The tilting could, for example, to be selected anywhere in the range of $1\frac{1}{2}$ - $2\frac{1}{2}$ degrees.

CLAIMS:

1. A holder for holding a disposable cutting insert (10), the insert having an axial hole (18) therein, the holder comprising a shank (13) having a recess (20) therein to provide a seating face (24) and at least one supporting shoulder (22) for supporting the cutting insert (10), the shank (13) having a threaded bore (26) therein, the bore being substantially normal to the seating face (24) and adapted for alignment with the hole (18) in the insert, the holder further comprising a threaded retention pin (12) engaging the threaded bore, the pin (17) having a cylindrical head portion (32) adapted to engage the hole (18) in the insert (10) wherein the retention pin (12) is fabricated from a blank having a cylindrical body portion (34) having a first axis (40) concurrent with the axis of the cylindrical head portion (32) thereof, the body portion (34) being threaded (44) on a second axis (46) angularly disposed with respect to the first axis (40) and intersecting the same, there being a retaining lip (60) formed in the upper edge of the supporting shoulder that engages the cutting insert (10), so that when the pin (12) is threaded into the bore (26) the head portion (32) rotates about the second axis (46) thereby forcing the cutting insert (10) against the supporting shoulder so that the retaining lip (60) engages an edge (16) of the insert (10) to retain the insert (10) fully in contact with the seating face and prevent tipping thereof.

2. A holder according to claim 1 further comprising a seating member (11) adapted to rest on the seating face (24) the seating member defining a shoulder (56) carrying said lip (60) to retain the edge of the insert.

FIG.1

FIG.5

FIG.4

FIG.6

FIG.7

FIG. 2

FIG. 3

**European Patent Office**

## EUROPEAN SEARCH REPORT

| DOCUMENTS CONSIDERED TO BE RELEVANT | | | EP 83109557.5 |
|---|---|---|---|
| Category | Citation of document with indication, where appropriate, of relevant passages | Relevant to claim | CLASSIFICATION OF THE APPLICATION (Int. Cl. ³) |
| A | GB - A - 831 244 (HILL) <br> * Fig. 4 * <br> -- | 1 | B 23 B 27/16 |
| A <br> D | EP - A1 - 0 054 611 (LINDSAY) <br> * Totality * <br> -- | 1 | |
| A | EP - A1 - 0 037 554 (PLANSEE) <br> * Fig. 1,2 * <br> -- | 1 | |
| A | US - A - 3 623 201 (GUSTAFSON) <br> * Fig. 2,3,5 * <br> -- | 1 | |
| A | GB - A - 1 167 347 (METRO) <br> * Fig. 2,3 * <br> ---- | 1 | **TECHNICAL FIELDS SEARCHED (Int. Cl. ³)** <br><br> B 23 B 27/00 <br> B 23 B 51/00 <br> B 23 C 5/00 |

The present search report has been drawn up for all claims

| Place of search | Date of completion of the search | Examiner |
|---|---|---|
| VIENNA | 29-02-1984 | FUCHS |